# EUROPEAN PATENT APPLICATION

(11) **EP 2 328 199 A2**
(43) Date of publication of application: **01.06.2011**
(21) Application number: 10252007.9
(22) Date of filing: 25.11.2010
(51) Int. Cl.: H01M 2/02, H01M 2/26, H01M 10/04

(54) **Rechargeable battery**

(30) Priority: 25.11.2009 US 264579 P; 14.09.2010 US 882125
(71) Applicant: Samsung SDI Co., Ltd, Gyeonggi-do (KR)
(72) Inventor: Hwang, Po-Jung, Yongin-si Gyeonggi-do (KR); Lee, Seung-Jae, Yongin-si Gyeonggi-do (KR); Kang, Yoo-Myung, Yongin-si Gyeonggi-do (KR); Ahn, Jae-Do, Yongin-si Gyeonggi-do (KR); Yang, Jae-Min, Yongin-si Gyeonggi-do (KR); Lee, Jeong-Heon, Yongin-si Gyeonggi-do (KR); Song, Byeong-Yeol, Yongin-si Gyeonggi-do (KR); Hwang, Jae-Hyun, Yongin-si Gyeonggi-do (KR); Kim, Sung-Soo, Yongin-si Gyeonggi-do (KR); Roh, Sae-Weon, Yongin-si Gyeonggi-do (KR)
(74) Representative: Taor, Simon Edward William

(57) **Abstract**

Disclosed is a rechargeable battery including an electrode assembly in which positive and negative electrodes and a separator may be exactly arranged. The rechargeable battery includes an electrode assembly including a positive electrode, a negative electrode, and a separator, a case housing the electrode assembly, a positive terminal being electrically connected with the positive electrode and protruded outside the case, and a negative terminal being electrically connected with the negative electrode and protruded outside the case. The positive and negative electrodes respectively include a plurality of positive uncoated regions and a plurality of negative uncoated regions extended out of the separator and laminated along one direction. The positive and negative uncoated regions include at least two openings respectively along the laminating direction.

## Description

### BACKGROUND OF THE INVENTION

### (a) Field of the Invention

The present invention relates to a rechargeable battery. More particularly, the described technology generally relates to an electrode assembly including a positive uncoated region and a negative uncoated region.

### (b) Description of the Related Art

A rechargeable battery can be recharged and discharged, unlike a primary battery that cannot be recharged. A low capacity rechargeable battery can be used for a small portable electronic device such as a mobile phone, and a laptop computer, while a large capacity rechargeable battery could used as a power storage source or an electrical source for driving a motor such as for an electric vehicle, a hybrid vehicle, and the like.

A rechargeable battery typically includes an electrode assembly including a positive electrode and a negative electrode, and a separator interposed between the positive and negative electrodes, a case housing the electrode assembly, and electrode terminals that are electrically connected with the electrode assembly and protruded outside the case. The electrode assembly typically includes several positive and negative electrodes and separators which are wound into a jelly-roll, folded in a zigzag way, or stacked in several layers.

In such an electrode assembly, positive and negative terminals are typically respectively fixed on positive and negative uncoated regions exposed out of the separator in a method of welding and the like.

This aforementioned rechargeable battery may have various output performances, cycle-lives, reliability, and the like depending on the arrangement and current collecting structure of an electrode assembly. For example, when positive and negative electrodes and a separator are be exactly arranged in an electrode assembly, the electrode assembly may cause more defected rechargeable battery in a subsequent process such as welding and assembly and a short cut.

The above information disclosed in this Background section is only for enhancement of understanding of the background of the described technology and therefore it may contain information that does not form the prior art that is already known in this country to a person of ordinary skill in the art.

### SUMMARY OF THE INVENTION

An exemplary embodiment provides a rechargeable battery including an electrode assembly in which positive and negative electrodes are exactly arranged and thus, having improved output performance, cycle-life, and reliability by increasing current collecting efficiency of each positive and negative electrode.

The rechargeable battery according includes an electrode assembly including a positive electrode, a negative electrode, and a separator, a case housing the electrode assembly, a positive terminal being electrically connected to the positive electrode and protruded out of the case, and a negative terminal electrically connected to the negative electrode and protruded out of the case. The positive and negative electrodes respectively include a plurality of positive uncoated regions and a plurality of negative uncoated regions extended out of the separator and piled up in one direction. The positive and negative uncoated regions may respectively include at least two openings arranged along their own laminating direction.

The openings can be used to check how well positive and negative electrodes are arranged along the thickness direction of the electrode assembly while the electrode assembly is piled up or spiral-wound.

According to a first aspect of the invention, there is provided a rechargeable battery as set out in Claim 1. Preferred features of this aspect are set out in claims 2 to 15

Accordingly, they may play a role of suppressing a possibility of producing a bad product in the subsequent processes after being piled up or spiral-wound and preventing a short-cut, resultantly improving cycle-life and reliability of a rechargeable battery.

### BRIEF DESCRIPTION OF THE DRAWINGS

FIG. 1 is a perspective view of a rechargeable battery according to a first embodiment of the present invention.
FIG. 2 is a cross-sectional view of a rechargeable battery shown in FIG. 1.
FIG. 3 is a perspective view of an electrode assembly of a rechargeable battery shown in FIG. 2.
FIG. 4 is a perspective view of parts of positive and negative electrodes of an electrode assembly shown in FIG. 3.
FIG. 5 is a cross-sectional view of a rechargeable battery according to a second embodiment of the present invention.
FIG. 6 is an exploded perspective view showing a positive uncoated region, a positive current collecting plate, a negative uncoated region, and a negative current collecting plate of a rechargeable battery according to a third embodiment of the present invention.
FIG. 7 is a cross-sectional view of a rechargeable battery according to a fourth embodiment of the present invention.
FIG. 8 is a schematic diagram of the electrode assembly of a rechargeable battery according to a fifth embodiment of the present invention.
FIG. 9 is a perspective view of the electrode assembly of a rechargeable battery according to a sixth embodiment of the present invention.
FIG. 10 is a front view of the electrode assembly of a rechargeable battery according to seventh embodiment of the present invention.

### DETAILED DESCRIPTION OF THE EMBODIMENTS

This disclosure will be described more fully hereinafter with reference to the accompanying drawings, in which exemplary embodiments of this disclosure are shown. As those skilled in the art would realize, the described embodiments may be modified in various different ways, all without departing from the spirit or scope of this disclosure.

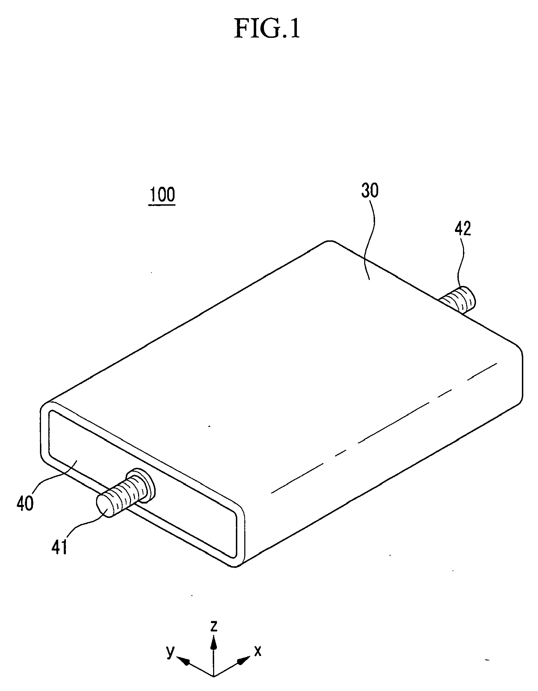

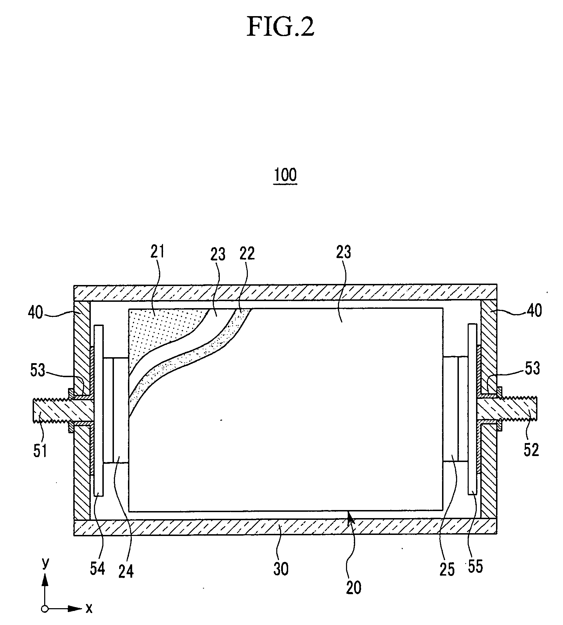

FIG. 1 is a perspective view of a rechargeable battery according to a first embodiment of the present invention, and FIG. 2 is a cross-sectional view of a rechargeable battery shown in FIG. 1.

Referring to FIGS. 1 and 2, a rechargeable battery 100 includes an electrode assembly 20 including a positive electrode 21, a negative electrode 22, and a separator 23, a case 30 having both open ends facing each other and housing the electrode assembly 20, a cap plate 40 connected to both open ends of the case 30 and closing and sealing the case 30, and positive terminal 51 and negative terminal 52 mounted on the cap plate 40 and electrically connected to the electrode assembly 20.

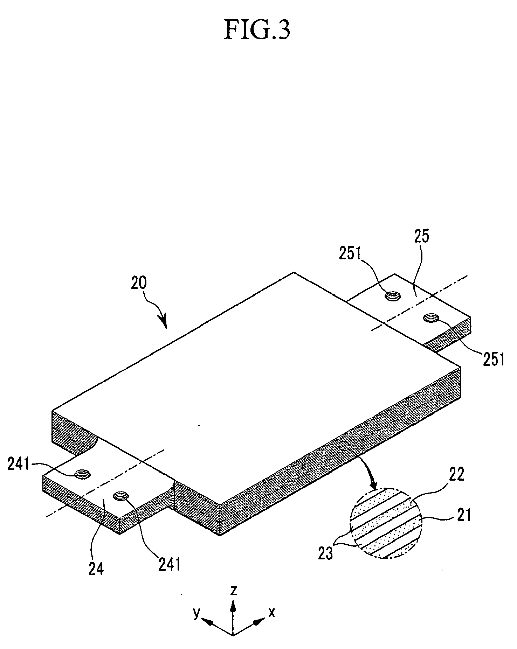

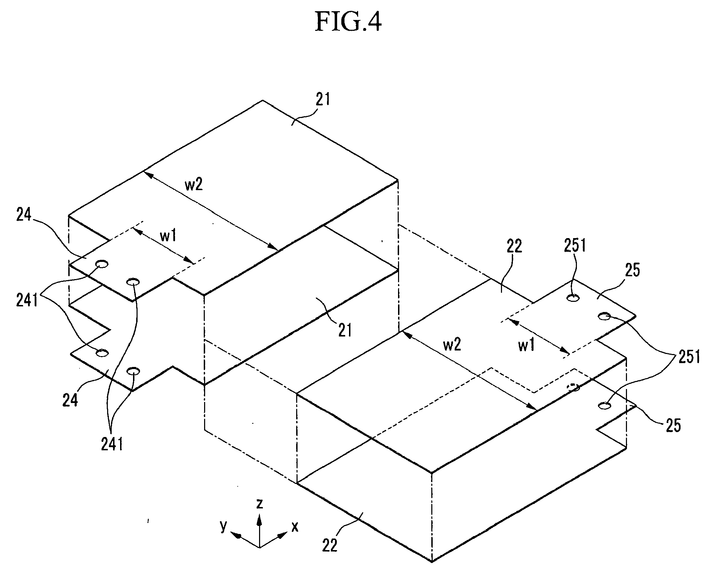

FIG. 3 is a perspective view of an electrode assembly of a rechargeable battery shown in FIG. 2, and FIG. 4 is a perspective view of parts of positive and negative electrodes of an electrode assembly shown in FIG. 3.

Referring to FIGS. 3 and 4, the electrode assembly 20 is fabricated by respectively inserting a separator 23 between positive electrodes 21 and negative electrodes 22 and then, laminating them together. The positive electrode 21 is prepared by coating a positive active material on both sides of a positive current collector, while a negative electrode 22 is prepared by coating a negative active material on both sides of a negative current collector.

Herein, the positive electrode 21 includes a positive uncoated region 24 extended out of the separator 23, while the negative electrode 22 also includes a negative uncoated region 25 extended out of the separator 23. The positive and negative uncoated regions 24 and 25 indicate a region uncoated with positive and negative active materials on positive and negative current collectors. The positive and negative uncoated region 24 and 25 are drawn out in an opposite direction in this embodiment. Other embodiments may, of course, include different arrangements of the positive and negative uncoated regions 24 and 25.

The electrode assembly 20 at large has a rectangular prism shape in this embodiment. Based on the drawing, the x axis is designated as the length direction of an electrode assembly 20, while the y axis is designated as the width direction of the electrode assembly 20. The positive and negative uncoated regions 24 and 25 are disposed to face each other along the length direction (x axis) of the electrode assembly 20 or along the width direction (y axis) thereof. FIGS. 3 and 4 show the former disposition.

The 'length direction' and 'width direction' of an electrode assembly 20 are recognized based on the embodiment of FIGS. 3 and 4. In other words, when positive and negative uncoated regions 24 and 25 face each other along the width direction (y axis) of an electrode assembly 20, the 'length direction' of an electrode assembly 20 is understood as a 'width direction,' while the 'width direction' is understood as a 'length direction'.

The positive uncoated regions 24 are laminated, and number as many as the number of a positive electrode 21. In this embodiment, the laminated positive uncoated regions 24 respectively include at least two openings 241 at the same position. In other words, the openings 241 are at the same position on each the number of a positive electrode 21. Likewise, the negative uncoated regions 25 are laminated, and number as many as the number of a negative electrode 22. The laminated negative uncoated regions 25 respectively include at least two openings 251 at the same position. In other words, the openings 251 are at the same position on each the number of a negative electrode 22 These openings 241 and 251 are formed in the positive and negative uncoated regions 24 and 25 before the lamination. In the drawing, the positive and negative uncoated regions 24 and 25 for example include two circular openings 241 and 251.

Accordingly, when several positive and negative electrodes 21 and 22 and separators 23 are laminated into an electrode assembly 20, openings 241 and 251 arranged along the thickness direction (z axis) of the electrode assembly 20 show how positive and negative electrodes 21 and 22 are exactly arranged.

Herein, the two openings 241 in a positive uncoated region 24 are disposed at both sides along an imaginary line crossing an electrode assembly 20 parallel to the length direction (x axis) (marked as a chain line in a FIG. 3). The two openings 251 in a negative uncoated region 25 are disposed at both side of an imaginary line located in the middle. The two openings 241 and 251 in positive and negative uncoated regions 24 and 25 may have the same pitch.

Since two openings 241 and 251 are formed at each side of a center line in this embodiment, they can be exactly checked when they are not matched one another along width direction (y axis) and length direction(x axis) of an electrode assembly 20 during the lamination. In other words, if one opening is located on the center line or two openings are formed only at one side, it can be harder to check disarrangement of positive and negative electrodes along width and length directions of an electrode assembly.

In FIGS. 3 and 4, two openings 241 and 251 are formed at each side of a center line, but the number of the opening is not limited thereto.

According to the first embodiment of the present invention, since a rechargeable battery 100 includes an electrode assembly 20 including several positive and negative electrodes 21 and 22 exactly arranged one another, it may have less deformation in the subsequent processes after the lamination. As a result, the rechargeable battery 100 may have a long cycle-life characteristic and high reliability.

The laminated positive uncoated regions 24 are closely attached one another and bonded together in a method of welding and the like. The laminated negative uncoated regions 25 are also closely attached one another and bonded together in a method of welding and the like.

Herein, positive and negative uncoated regions 24 and 25 may have smaller width than positive and negative electrodes 21 and 22. In FIG. 4, the width of the positive and negative uncoated regions 24 and 25 are marked as W1, while the width of the positive and negative electrodes 21 and 22 are marked as W2. In this way, an electrode assembly 20 can be prevented from distortion, while positive and negative uncoated regions 24 and 25 are closely attached and bonded together.

Referring to FIGS. 1 and 2 again, an electrode assembly 20 is disposed in a case 30 with a positive uncoated region 24 toward one end of the case 30 and a negative uncoated region 25 toward the other end of the case 30. Then, a cap plate 40 including a positive terminal 51 is combined with one end of the case 30, while another cap plate 40 including a negative terminal 52 is combined with the other end of the case 30.

The positive and negative terminals 51 and 52 are mounted on a cap plate 40 with an insulating gasket 53 therebetween. Inside the cap plate 40 toward the electrode assembly 20, mounted are a positive current collecting plate 54 connected to a positive terminal 51 and a negative current collecting plate 55 connected to a negative terminal 52.

The positive uncoated region 24 is fixed to the positive current collecting plate 54 in a method of welding and the like, while the negative uncoated region 25 is fixed to the negative current collecting plate 55 in a likewise method. Accordingly, the positive terminal 51 is electrically connected to the positive electrode 21, while the negative terminal 52 is electrically connected to the negative electrode 22.

On the other hand, the drawing shows that positive and negative terminals 51 and 52 are disposed in an opposite direction, but positive and negative terminals can be disposed parallel to each other and electrically connected to one cap plate.

In some embodiments of the present invention, there is provided a rechargeable battery comprising an electrode assembly. The electrode assembly includes a plurality of first electrodes, each first electrode comprising a first coated region that is coated with a first active material, and a first uncoated region that includes at least one first alignment opening. The electrode assembly further includes a plurality of second electrodes, each second electrode including a second coated region that is coated with a second active material, and a second uncoated region that includes at least one second alignment opening. A plurality of separators are also provided, each separator being located between a said first and a said second electrode. In such embodiments of the invention, the first alignment openings are substantially aligned with each other, and the second alignment openings are substantially aligned with each other. Therefore, such embodiments of the invention facilitate the alignment of the different layers of the electrode assembly.

As discussed above, the first uncoated region of each first electrode can include at least two first alignment openings, and the second uncoated region of each second electrode can include at least two second alignment openings. When at least two first alignment openings are provided, they can be located symmetrically with respect to a virtual line running along the electrode assembly. Similarly, when at least two second alignment openings are provided, they can be located symmetrically with respect to a virtual line running along the electrode assembly. In some embodiments, this virtual line can run parallel to a major axis of the electrode assembly, and could be (for example) a centre line that runs down the centre of the electrode assembly.

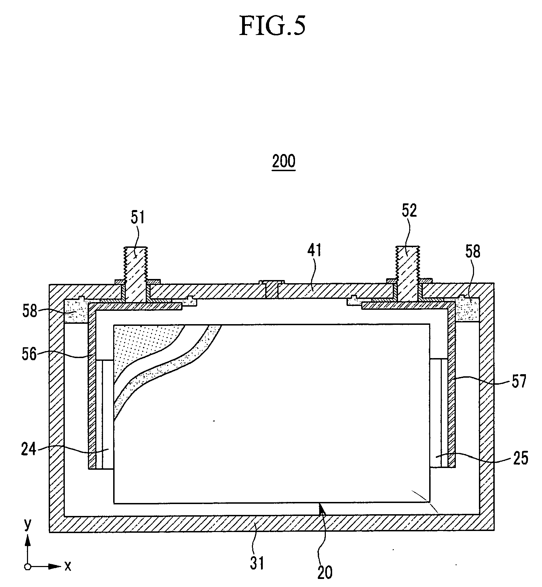

FIG. 5 is a cross-sectional view of a rechargeable battery according to a second embodiment of the present invention.

Referring to FIG. 5, a rechargeable battery 200 according to a second embodiment includes a case 31 having one open end and a cap plate 41 including positive and negative terminals 51 and 52 and connected to the open end. Then, a bent plate-shaped positive current collecting plate 56 is disposed between the positive terminals 51 and the positive uncoated region 24. Another bent plate-shaped negative current collecting plate 57 is disposed between the negative terminal 52 and the negative uncoated region 25.

The positive uncoated region 24 is fixed to the positive current collecting plate 56 in a method of welding and the like, while the negative uncoated region 25 is fixed to the negative current collecting plate 57 in a likewise method. Next, an insulting member 58 is disposed between the cap plate 41 and the positive current collecting plate 56 and also between the cap plate 41 and the negative current collecting plate 57. The electrode assembly 20 has the same composition as one of the first embodiment of the present invention.

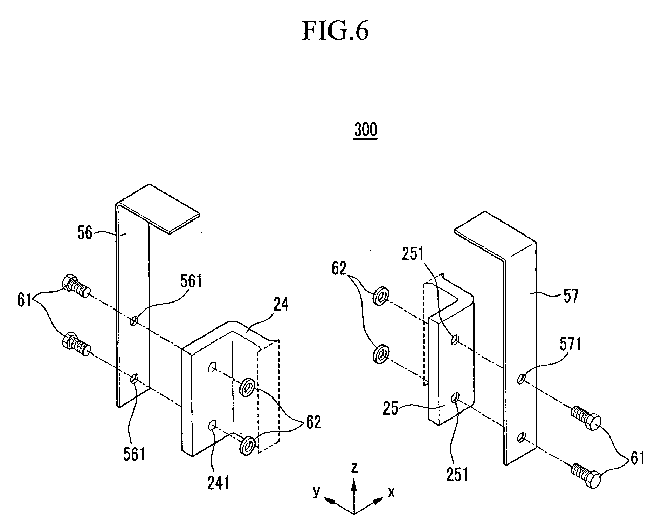

FIG. 6 is an exploded perspective view showing a positive uncoated region, a positive current collecting plate, a negative uncoated region, and a negative current collecting plate of a rechargeable battery according to a third embodiment of the present invention.

Referring to FIG. 6, a rechargeable battery 300 according to a third embodiment of the present invention includes openings 241 and 251 in positive and negative uncoated regions 24 and 25, which are used as a fastening hole for being mechanically combined with positive and negative current collecting plates 56 and 57. In other words, according to the third embodiment, a fastening member such as a bolt-nut assembly or a rivet may be used instead of welding, connecting a positive uncoated region 24 with a positive current collecting plate 56 and a negative uncoated region 25 with a negative current collecting plate 57.

Accordingly, openings 561 and 571 on positive and negative current collecting plates 56 and 57 are formed to correspond to openings 241 and 251 on positive and negative uncoated regions 24 and 25. In case of the bold-nut assembly, a bolt 61 is put through a positive current collecting plate 56 and a positive uncoated region 24 and then, tightened and fixed with a nut 62. The rivet is heated and put through a positive current collecting plate and a positive uncoated region. Then, the end is modified by external power to be fixed. FIG. 6 shows assembly of a bolt 61 and a nut 62 as an example of the fastening member.

In the rechargeable battery 300 according to the third embodiment, openings 241 and 251 can be used to check how well an electrode assembly 20 is arranged and also to facilitate mechanical combination of a positive uncoated region 24 with a positive current collecting plate 56 and also, a negative uncoated region 25 with a negative current collecting plate 57.

According to the first to third embodiments of the present invention, cases 30 and 31 are made of aluminum, aluminum alloy, or a conductive metal plated with nickel and has a shape corresponding to an electrode assembly 20. Other embodiments may use different materails.

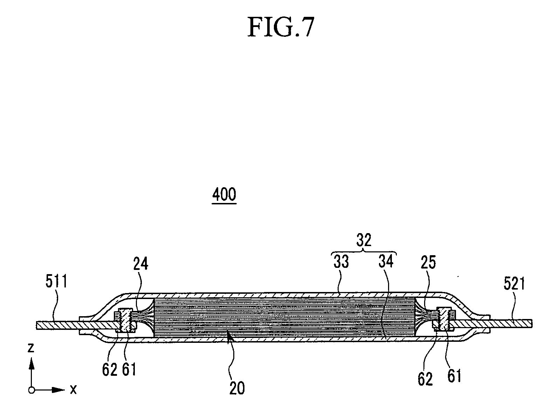

FIG. 7 is a cross-sectional view of a rechargeable battery according to a fourth embodiment of the present invention.

Referring to FIG. 7, the rechargeable battery 400 includes a case 32 made of a laminate sheet and positive and negative terminals 511 and 521 directly fixed with positive and negative uncoated regions 24 and 25 and drawn out of the case 32. The case 32 includes an upper case 33 and a lower case 34. According to a fourth embodiment of the present invention, a rechargeable battery 400 does not include a cap plate unlike the aforementioned exemplary embodiments.

The laminate sheet includes a metal layer and a resin layer united by an adhesive layer. The upper and lower cases 33 and 34 house an electrode assembly 20 impregnated in an electrolyte solution and then, closed and sealed along the edge by thermal coalescence.

The positive and negative terminals 511 and 521 are shaped into a plate with a predetermined thickness and may include a sealing region (not shown) formed by an insulating polymer on the region where the upper and lower cases 33 and 34 are overlapped. The sealing region insulates positive and negative terminals 511 and 521 from the case 32 and plays a role of protecting the positive and negative terminals 511 and 521 during the thermal coalescent treatment.

The positive and negative terminals 511 and 521 may also have an opening and can be united with positive and negative uncoated regions 24 and 25 by a fastening member such as a bolt-nut assembly or a rivet. FIG. 7 shows the fastening member assembly example of a bolt 61 and a nut 62. On the other hand, a positive uncoated region 24 can be welded with a positive terminal 511 without a fastening member, while a negative uncoated region 25 can be welded with a negative terminal 521.

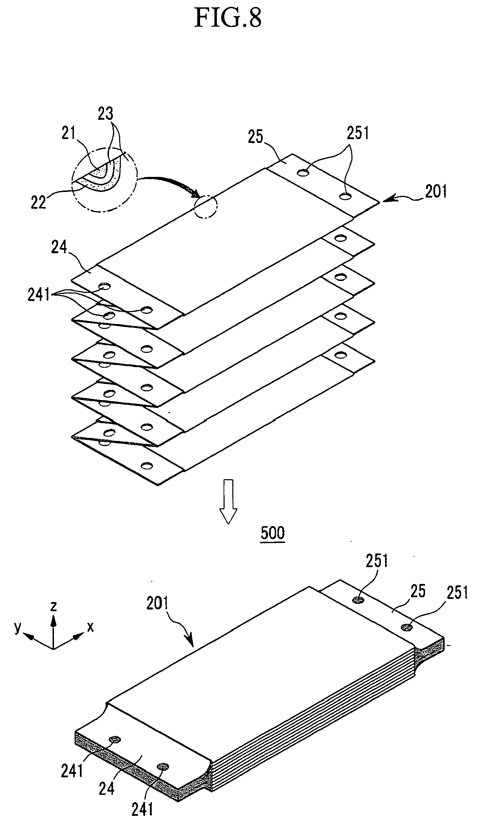

FIG. 8 is a schematic diagram of an electrode assembly of a rechargeable battery according to a fifth embodiment of the present invention.

Referring to FIG. 8, a rechargeable battery 500 according to the fifth embodiment may include the same as a rechargeable battery according to one of the first to fourth embodiments except that an electrode assembly 201 is folded in a zigzag way and laminated.

The electrode assembly 201 may include one sheet of a positive electrode 21, one sheet of a negative electrode 22, one sheet of a separator 23 disposed therebetween, and another sheet of a separator 23 disposed outside of either of the positive and negative electrodes 21 and 22. The positive and negative electrodes 21 and 22 and separators 23 are folded several times in a length direction, forming the electrode assembly 201.

Positive and negative uncoated regions 24 and 25 extended out of the separator 23 may have a plurality of openings 241 and 251. These openings 241 and 251 are formed in advance in the positive and negative uncoated regions 24 and 25 considering the folding line of the electrode assembly 201 and help arrangement of the electrode assembly 201 in a thickness direction (z axis) while the electrode assembly 201 is folded and laminated.

The laminated positive and negative uncoated regions 24 and 25 may be cut at both edges to have a shorter width and then, united together in a method of welding and the like.

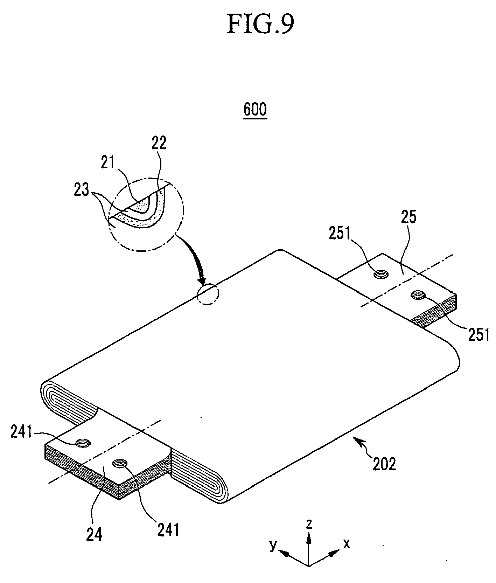

FIG. 9 is a perspective view of an electrode assembly of a rechargeable battery according to a sixth embodiment of the present invention.

Referring to FIG. 9, a rechargeable battery 600 according to the sixth embodiment may include the same as one of the rechargeable batteries according to the first to the fourth embodiments except that an electrode assembly 202 is wound into a jelly-roll.

The electrode assembly 202 includes one sheet of a positive electrode 21, one sheet of a negative electrode 22, one sheet of a separator 23 disposed therebetween, and another sheet of a separator 23 disposed outside of either of positive and negative electrodes 21 and 22. The positive and negative electrodes 21 and 22 and the separator 23 are wound several times and pressed, forming an electrode assembly 202.

Positive and negative uncoated regions 24 and 25 are extended out of the separator 23 and have a plurality of openings 241 and 251. These openings 241 and 251 are formed in advance on the positive negative uncoated regions 24 and 25 considering where the electrode assembly 202 is wound and thus, help arrangement of the electrode assembly 202 since these openings 241 and 251 are arranged along a thickness direction (z axis) while the electrode assembly 202 is wound.

However, a spiral-wound electrode assembly 202 may have openings 241 and 251 not arranged along the thickness direction due to thickness of positive and negative electrodes 21 and 22 and a separator 23, curvature at a curved line of the positive and negative electrodes 21 and 22 and the separator 23 when they is turned 180°, other various process deviations, and the like during the winding.

In this case, electrode assembly 202 can be evaluated based on an allowance by measuring location deviation of the openings 241 and 251 using an optical device or something, after setting an allowance along the thickness direction (z axis) regarding the location deviation of the openings 241 and 251.

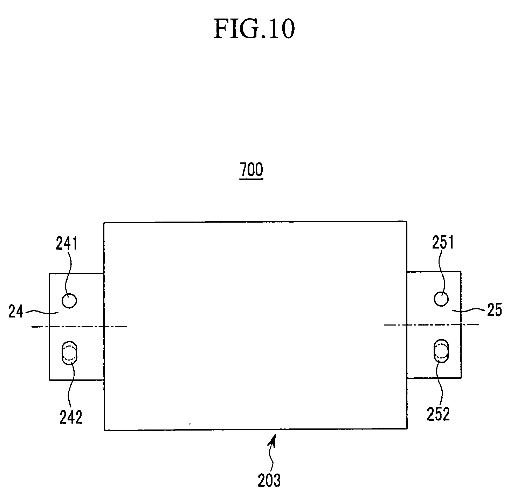

FIG. 10 is a front view of an electrode assembly of a rechargeable battery according to seventh embodiment of the present invention.

Referring to FIG. 10, a rechargeable battery 700 according to the seventh embodiment may comprise the same as one of the rechargeable batteries according to the first to the sixth embodiments except that positive and negative uncoated regions 24 and 25 have first circular openings 241 and 251 and second non-circular openings 242 and 252. In FIG. 10, No. 203 indicates an electrode assembly.

The second openings 242 and 252 are formed to have a predetermined extra space toward the first openings 241 and 251 and also, another predetermined extra space toward the first openings 241 and 251 at the other opposite side based on an imaginary circular opening (marked as a dotted line). Herein, the second openings 242 and 252 have the same both edge curvatures as the one of the imaginary circular opening.

Then, when a fastening member (not shown) is put into the first openings 241 and 251 and the second openings 242 and 252, it may be easily fixed with positive and negative uncoated regions 24 and 25 despite some process error between a fastening member for the first openings 241 and 251 and another fastening member for the second openings 242 and 252.

While this disclosure has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable battery comprising:
an electrode assembly including:
a plurality of first electrodes, each first electrode comprising a first coated region that is coated with a first active material, and a first uncoated region that includes at least one first alignment opening;
a plurality of second electrodes, each second electrode including a second coated region that is coated with a second active material, and a second uncoated region that includes at least one second alignment opening; and
a plurality of separators, each separator being located between a said first and a said second electrode;
wherein the first alignment openings are substantially aligned with each other, and the second alignment openings are substantially aligned with each other.

2. A rechargeable battery according to Claim 1, wherein the first uncoated region of each first electrode includes at least two first alignment openings, and the second uncoated region of each second electrode includes at least two second alignment openings.

3. A rechargeable battery according to Claim 2, wherein said at least two first alignment openings are located symmetrically with respect to a virtual line running along the electrode assembly.

4. A rechargeable battery according to Claim 3, wherein said at least two second alignment openings are also located symmetrically with respect to said virtual line running along the electrode assembly.

5. A rechargeable battery according to Claim 3 or 4, wherein said virtual line runs parallel to a major axis of the electrode assembly.

6. A rechargeable battery according to Claim 3 to 5, wherein said virtual line is a centre line that runs down the centre of the electrode assembly.

7. A rechargeable battery according to any one of Claims 1 to 6, wherein the first uncoated region is connected to a first current connection plate and the second uncoated region is connected to a second current connection plate.

8. A rechargeable battery according to Claim 7, wherein the first current connection plate comprises at least one first connection opening, and the first uncoated region is connected to the first current connection plate using at least one first fastening means inserted through a said first alignment opening and a said first connection opening.

9. A rechargeable battery according to Claim 7 or 8, wherein the second current connection plate comprises at least one second connection opening, and the second uncoated region is connected to the second current connection plate using at least one second fastening means inserted through a said second alignment opening and a said second connection opening.

10. A rechargeable battery according to Claim 8 or 9, wherein the first and/or second fastening means includes any one of nuts, bolts and rivets.

11. A rechargeable battery according to Claim 7, wherein the first uncoated region is connected to the first current connection plate by welding, and the second uncoated region is connected to the second current connection plate by welding.

12. A rechargeable battery according to any one of Claims 7 to 11, further comprising:
a case housing the electrode assembly;
a first terminal connected to the first current connection plate; and
a second terminal connected to the second current connection plate.

13. A rechargeable battery according to any one of Claims 1 to 6, further comprising:
a case housing the electrode assembly;
a first terminal connected to the first uncoated region; and
a second terminal connected to the second uncoated region.

14. A rechargeable battery according to Claim 13, wherein the first terminal comprises at least one first connection opening, and the first uncoated region is connected to the first terminal using at least one first fastening means inserted through a said first alignment opening and a said first connection opening.

15. A rechargeable battery according to Claim 13 or 14, wherein the second terminal comprises at least one second connection opening, and the second uncoated region is connected to the second terminal using at least one second fastening means inserted through a said first alignment opening and a said second connection opening.
